# EUROPÄISCHE PATENTSCHRIFT

(11) **EP 1 145 843 B1**
(45) Veröffentlichungstag und Bekanntmachung des Hinweises auf die Patenterteilung: **22.02.2006**
(21) Anmeldenummer: 01107710.4
(22) Anmeldetag: 30.03.2001
(51) Int. Cl.: B32B 27/18, C09K 3/18, B65D 65/40

(54) **Siegelbare Kaschierfolie mit Antibeschlageigenschaften und Sauerstoffbarriere sowie ein diese Folie enthaltendes Verpackungsmaterial**
Heat sealable film containing antifog properties and oxygen barrier properties and use as packaging material
Feuille thermosoudable contenant des propriétés antibuée et une haute capacité d'arrêt de l'oxygène et leur utilisation comme matériau d'emballage

(30) Priorität: 12.04.2000 DE 10018049
(43) Veröffentlichungstag der Anmeldung: 17.10.2001
(73) Patentinhaber: Wipak Walsrode GmbH & Co. KG, 29656 Walsrode (DE)
(72) Erfinder: Eggers, Holger, Dr., 79117 Freiburg (DE); Klein, Rudi, 29664 Walsrode (DE); Müller, Claudia, Dr., 29664 Walsrode (DE); Brandt, Rainer, Dr., 29664 Walsrode (DE)
(74) Vertreter: Kutzenberger, Helga

(56) Entgegenhaltungen:
- WO-A-95/18845
- WO-A-99/00250
- DATABASE WPI Section Ch, Week 198220 Derwent Publications Ltd., London, GB; Class A18, AN 1982-40680E XP002172274 & JP 57 061036 A (KURARAY CO LTD), 13. April 1982 (1982-04-13)
- DATABASE WPI Section Ch, Week 198246 Derwent Publications Ltd., London, GB; Class A14, AN 1982-98188E XP002172276 & JP 57 162731 A (KURARAY CO LTD), 6. Oktober 1982 (1982-10-06)
- DATABASE WPI Section Ch, Week 199212 Derwent Publications Ltd., London, GB; Class A17, AN 1992-091659 XP002172277 & JP 04 033850 A (NIPPON CARBIDE KOGYO KK) , 5. Februar 1992 (1992-02-05)
- DATABASE WPI Section Ch, Week 199517 Derwent Publications Ltd., London, GB; Class A18, AN 1995-127913 XP002172278 & JP 07 052334 A (SUMITOMO BAKELITE CO LTD), 28. Februar 1995 (1995-02-28)
- DATABASE WPI Section Ch, Week 199311 Derwent Publications Ltd., London, GB; Class A18, AN 1993-088365 XP002172279 & JP 05 031865 A (SHOWA DENKO KK), 9. Februar 1993 (1993-02-09)

## Beschreibung

Die vorliegende Erfindung betrifft eine siegelbare Kaschierfolie mit hoher Sauerstoffbarriere und ausgezeichneten Antibeschlageigenschaften bei niedrigen Temperaturen. Die erfindungsgemäße Folie ist im Verbund mit einer geeigneten Trägerfolie insbesondere für die Verpackung von feuchten, sauerstoffempfindlichen Packgütern wie beispielsweise Frischfleisch geeignet, die gekühlt dem Käufer präsentiert werden. Eine geeignete Verpackung, insbesondere eine Deckelverpackung, unter Verwendung der erfindungsgemäßen Kaschierfolie gewährleistet hier eine nicht durch Kondensation auf der Innenseite gestörte Packungsoptik. Die Erfindung umfaßt auch Verbunde, die die erfindungsgemäße siegelbare Kaschierfolie als Bestandteil enthalten sowie die Verwendung der siegelbaren Kaschierfolie oder der sie enthaltenden Packstoffe zur Verpackung von Lebensmitteln.

Frische Fleischwaren werden in zunehmendem Umfang im bereits gebrauchsfertig portionierten Zustand dem Verbraucher angeboten. Auf diese Weise wird eine bessere Hygiene gewährleistet als im Falle des Portionierens und Verpackens von Hand an der konventionellen Fleischtheke etwa in einem Supermarkt. Zudem ist durch die keimärmere Portionierung und sichere Verpackung eine längere Haltbarkeit der vorportionierten gegenüber der kundenspezifisch zugeschnittenen Fleischware gewährleistet.

Diese Entwicklung im Markt stellt besondere Anforderungen an die zur Verpackung von derartig vorportionierten Fleischwaren verwendeten Folien. So wird als Verpackung in den meisten Fällen eine Deckelverpackung bestehend aus einer steife Mulde und einem transparenten Deckel eingesetzt. Beide Komponenten müssen dabei zum Schutz des Füllguts gegenüber oxidativem Verderb über eine hohe Sauerstoffbarriere verfügen. Die Deckelfolie muss überdies eine gute Transparenz aufweisen, um dem Verbraucher den Blick auf das dargebotene Produkt zu ermöglichen und dies möglichst attraktiv präsentieren zu können. Aufgrund der kühlen Lagerung und der feuchtigkeitsgesittigten Atmosphäre in der Verpackung kommt es hier typischerweise zu einer Kondensation auf der Innenseite des transparenten Deckels. Diese Kondensation ist insoweit störend als sie zum Beschlagen der Deckelfolie und damit zu einer verschlechterten Sicht auf das Produkt fuhrt. Da ein Niederschlagen der in der Packung enthaltenen Feuchtigkeit auf der Oberfläche der Verpackung prinzipiell nicht vermieden werden kann, besteht hier ein Bedürfnis nach Deckelfolien, die eine Kondensation in Form eines zusammenhängenden und damit die Durchsicht nicht beeinträchtigenden Flüssigkeitsfilms ermöglichen.

Die Ausführung von entsprechenden Folien nach dem Stand der Technik wird im folgenden dargestellt. Für diese und alle weiteren Darlegungen gelten die folgenden Übereinkünfte.
- Für die Beschreibung der in den einzelnen Schichten enthaltenen Polymere werden, wenn nicht anderweitig kenntlich gemacht, Kurzzeichen für Kunststoffe nach DIN 7728 bzw. ISO 1043-1987 (E) verwendet.
- Bei mehrschichtigen Aufbauten wird die Schichtenfolge durch eine Aneinanderreihung der Kurzzeichen der Polymere der entsprechenden Schichten oder anderweitig erläuterter Symbole, voneinander getrennt durch doppelte Schrägstriche, wiedergegeben. Die Seite der Siegelschicht ist dabei stets rechts. Dabei kann auch nur ein Teil der gesamten, den Aufbau ausmachenden, Schichtenfolge angegeben werden. In diesen Fällen ist ebenfalls die Seite der Siegelschicht stets rechts und nicht angegebene Schichten oder Kombinationen von Schichten durch drei Punkte, ..., kenntlich gemacht. Gleichartige Polymere können durch eine Numerierung voneinander unterschieden werden, beispielsweise in der Form PE-LD-1//PE-LD-2//PE-LD-3. Mischungen aus unterschiedlichen Polymeren werden durch das Kennzeichen + sowie die Zusammenfassung der Komponenten in Klammern, ( ), kenntlich gemacht. Gegebenenfalls können hier zusätzlich Angaben zur prozentualen Zusammensetzung gemacht werden. Wenn nicht anders angegeben handelt es sich in solchen Fällen stets um Gewichtsanteile, die auf das Gesamtgewicht der Mischung bezogen sind. So beschreibt beispielsweise der Ausdruck ...//PA//E/VOH//...//(PE-LD-1+PE-LLD)//d einen Aufbau mit einer nicht spezifizierten Außenschicht oder außenliegenden Schichtenfolge, gefolgt von einer im wesentlichen aus Polyamid bestehenden Schicht, gefolgt von einer im wesentlichen aus Ethylen/Vinylalkohol-Copolymerisat (E/VOH) bestehenden Schicht, gefolgt von einer nicht spezifizierten Schicht oder Schichtenfolge, gefolgt von einer Schicht, die eine Mischung aus einem mit der Nummer 1 versehenem Polyethylen niedriger Dichte (PE-LD-1) und einem Ethylen/α-Olefin-Copolymerisat (PE-LLD) umfaßt, sowie einer mit d näher zu spezifizierenden, auf der Siegelseite folgenden Schicht.
- Schichten, die primär der mechanischen Verbindung der beidseitig an sie angrenzenden Schichten dienen, werden im folgenden durch ...//HV//... bezeichnet, wobei HV als Abkürzung für Haftvermittler dient. Typische als Haftvermittler verwendete Polymere werden weiter unten beschrieben.
- Die Angabe von Schmelzpunkten bezieht sich im folgenden auf den nach ASTM 3418 mit DSC-Analyse (Differential Scanning Calorimetry Analyse) bestimmten Wert.
- Die Angabe von Erweichungspunkten bezieht sich im folgenden auf den nach ISO 306 bestimmten Wert.
- Die Angabe von Schmelzflußraten bezieht sich im folgenden auf den nach DIN ISO 1133 bestimmten Wert. Erfolgen keine weiteren Angaben, wird als Meßbedingung in Form der Temperatur sowie der Auflagemasse Bedingung D in DIN ISO 1133 mit einer Temperatur von 190°C und einer Auflagemasse von 2,16 kg vorausgesetzt.
- Die Dichte der Rohstoffe bezieht sich auf die Meßmethode entsprechend ISO 1183 (A).

Stand der Technik ist hier seit längerem der Gebrauch von kaschierten Deckelfolien mit gerecktem Trägerfilm und einer Siegelschicht aus Polyethylen oder Ethylen-Copolymeren.

Die Notwendigkeit für einen gereckten Trägerfilm ergibt sich in erster Linie aus den aufgrund der hohen Steifigkeit besseren Maschinenlaufeigenschaften solcher Verbunde gegenüber ungereckten Folien. Als Trägerfilm kommen überwiegend biaxial orientiertes Polypropylen (BOPP) oder biaxial orientiertes Polyethylenterephthalat (BOPET) zum Einsatz. Entsprechende Typen verfügen ohne weitere Veredelung, wie etwa eine Oxidbedampfung, nicht über die für den oben skizzierten Einsatz erforderliche Sauerstoffbarriere.

Als Siegelschicht werden in dem Fall, dass die Trägerfolie selbst über keine ausreichende Sauerstoffbarriere verfügt, üblicherweise mehrschichtige Folien aus Polyethylen und/oder Ethylen-Copolymerisaten verwendet, die über eine oder mehrere Schicht(en) aus Ethylen/Vinylalkohol-Copolymerisaten (EVOH) als Sauerstoffsperre verfügen. Diese Folien werden hier im folgenden als "Barrieresiegelschicht" oder "Barrieresiegelschichtfolien" bezeichnet. Der Aufbau solcher Barrieresiegelschichtfolien ist beispielsweise in EP-A 560 495, EP-A 561 428, US-A 4 726 984 oder US - A 4 547 433 niedergelegt.

Die niedrige Oberflächenspannung von Polyethylen oder Ethylen-Copolymeren auf der Siegelseite der genannten mehrschichtigen sauerstoffsperrenden Siegelschichten ermöglicht bei Kontakt mit Wasser keine Benetzung sondern führt zu einer Bildung von Wassertröpfchen auf der Oberfläche. In genügend feindisperser Form, die etwa bei einem Kondensationsvorgang auf der Oberfläche erreicht wird, führen diese Tröpfchen zu einer starken Eintrübung der Folie. Dieses Phänomen wird üblicherweise als Beschlagen bezeichnet.

Bekannt ist hier die Verwendung von migrierenden Additiven in Barrieresiegelschichten, um eine Benetzbarkeit mit Wasser zu erreichen. Als Additiv werden üblicherweise Ester aus mehrwertigen Alkoholen wie Sorbitan oder Glycerol mit gesättigten oder ungesättigten aliphatischen Carboxylsäuren, üblicherweise enthaltend zwischen 8 und 40 C-Atomen, verwendet. Dabei werden bevorzugt Mono- und/oder Diester verwendet. Eine andere Klasse von üblicherweise verwendeten Additiven besteht aus Polyoxyethylenverbindungen. Gebräuchlich sind hier beispielsweise Ether aus Polyoxyethylen mit höheren aliphatischen Alkoholen.

Sowohl hinsichtlich Konzentration und Zusammensetzung der Additive wie auch der Struktur der Barrieresiegelschicht ist ein in der Anwendung insgesamt zufriedenstellendes Produkt noch nicht gefunden. Vielmehr zeigt die Vielzahl der Patentanmeldungen auf diesem Gebiet, wie beispielsweise in EP-A 739 398 dargestellt, dass hier ein erhebliches Bedürfnis nicht abgedeckt ist.

Anforderungen an Barrieresiegelschichten mit Antifog-Eigenschaften sind insbesondere der Wunsch nach einer im Anschluß an den Abpackvorgang schnell einsetzenden und ausreichend lang anhaltenden Antibeschlagwirkung.

Die Folie muss daneben für einen problemlosen Lauf auf der Verpackungsmaschine eine gute Gleitfähigkeit insbesondere gegen Metall aufweisen. Typischerweise ist dies für Folien mit Antifog-Eigenschaften nicht der Fall, da der migrierende Antifog-Wirkstoff sich auf der Oberfläche absetzt und dort eine aufgrund seiner chemischen Zusammensetzung stumpfe, klebrige Schicht bildet.

Häufig wird in der Praxis auch eine leichte Delaminierbarkeit von Barrieresiegelschichten mit Antifog-Eigenschaften beobachtet. Dieser Effekt ist auf die Reaktion der in Haftvermittlern enthaltenen Säuregruppen mit den unveresterten Hydroxylgruppen der mehrwertigen Alkohole der verwendeten Antifog-Wirkstoffe bei der Coextrusion zurückzuführen. Hieraus ergibt sich als weitere Anforderung eine möglichst schwere Trennbarkeit des Verbunds zwischen den Schichten.

Somit stellte sich die Aufgabe, eine Barrieresiegelschicht mit einer nach Verpackung schnell einsetzenden und ausreichend lang anhaltenden Antibeschlagwirkung, mit guter Gleitfähigkeit gegen Metall sowie mit einer hohen mechanischen Integrität bereitzustellen.

Gegenstand der Erfindung ist eine mehrschichtige siegelbare Kaschierfolie von innen nach außen aufgebaut aus
a) einer Innenschicht (i) aus Ethylen/Vinylalkohol-Copolymerisat, die begrenzt wird von
b) einer Haftvermittlerschicht (ii) auf der Siegelseite und einer Haftvermittlerschicht (ii') auf der Kaschierseite der Folie, gefolgt von
c) wenigstens einer weiteren Schicht (iii) auf der Kaschierseite der Folie und wenigstens einer Schicht (iv) auf der Siegelseite der Folie, auf die
d) die Siegelschicht (v) aufgebracht ist,

wobei die mehrschichtige Folie insgesamt 0,1 bis 3 Gew.-%, bezogen auf das Gesamtgewicht der Folie, eines Sorbitanmonoesters enthält.

In bevorzugter Form enthält die genannte mehrschichtige Folie insgesamt 0,3 bis 1 Gew.-% Sorbitanmonoester.

Der Sorbitanmonoester ist in bevorzugter Form ein Monoester aus Sorbitan und gesättigten oder ungesättigten Fettsäuren mit zwischen 8 und 40 C-Atomen. Beispiele für solche Fettsäuren sind Palmitinsäure, Laurinsäure, Ölsäure, Linolsäure, etc.

In besonders bevorzugter Form werden Sorbitanmonopalmitat und/oder Sorbitanmonolaurat verwendet.

Die mehrschichtige Folie enthält in bevorzugter Form keine oder nur geringe Mengen der üblicherweise als Gleitmittel bezeichneten Substanzen zur Verbesserung der Gleiteigenschaften von Folien. Typische Substanzen sind höhere aliphatische Säureamide, daraus insbesondere Erucasäureamid oder Ölsäureamid, sowie höhere aliphatische Säureester, Wachse, Metallseifen oder Polydirethylsiloxane. Bevorzugt ist ein Gehalt von Gleitmitteln unterhalb von 100 ppm bezogen auf das Gesamtgewicht der mehrschichtigen Folie. Insbesondere bevorzugt ist eine gleitmittelfreie Ausführung der mehrschichtigen Folie.

Üblicherweise enthält Schicht (iv) zum Zeitpunkt der Herstellung der Folie wesentlich weniger Sorbitanmonoester als die Schicht (v). Maximal enthält die Schicht (iv) 0,02 Gew.-% Sorbitanmonoester. In einer besonders bevorzugten Ausführung enthält Schicht (iv) zum Zeitpunkt der Herstellung der Folie überhaupt kein Sorbitanmonoester. Durch Diffusionsprozesse kann der Sorbitanmonoester allerdings von Schicht (v) in Schicht (iv) imigrieren, so dass nach einiger Zeit auch in dieser Schicht Sorbitanmonoester nachweisbar wird.

Die Schichten (iii), (iv) und (v) enthalten neben den gegebenenfalls enthaltenen Sorbitanmonoester in bevorzugter Form Polymere oder Mischungen aus Polymeren aus der Gruppe umfassend Polypropylen (PP), Copolymerisate aus Ethylen und Propylen (E/P), Copolymerisate aus Ethylen und Vinylacetat (E/VA), besonders bevorzugt mit einem Vinylacetat-Gehalt, bezogen auf das Gesamtgewicht des Polymers, von höchstens 20%, Copolymerisate aus Ethylen und ungesättigten Estern wie Butylacrylat oder Ethylacrylat (E/BA bzw. E/EA), Copolymerisate aus Ethylen und ungesättigten Carbonsäuren (E/AA, E/MAA), besonders bevorzugt mit einem Gehalt des Carbonsäurecomonomers, bezogen auf das Gesamtgewicht des Polymers, von höchstens 15%, in noch weiter bevorzugter Form höchstens 8%, Salze der Copolymerisate aus Ethylen und ungesättigten Carbonsäuren, insbesondere E/MAA, (Ionomere), besonders bevorzugt mit einem Gehalt des Carbonsäurecomonomers, bezogen auf das Gesamtgewicht des Ionomers, von höchstens 15%, in noch weiter bevorzugter Form höchstens 10%, Polyethylen niedriger Dichte (PE-LD), besonders bevorzugt in einer Dichte von wenigstens 0,91 g/cm³ und höchstens 0,935 g/cm³ Polyethylen hoher Dichte (PE-HD), Copolymerisate (PE-LLD) aus Ethylen und α-Olefinen mit wenigstens 3 C-Atomen, beispielsweise Buten, Hexen, Octen, 4-Methyl-1-Penten. Die Copolymerisate (PE-LLD) aus Ethylen und α-Olefinen können mit konventionellen Katalysatoren oder mit Metallocen-Katalysatoren hergestellt sein.

Die Schicht (i) enthält bevorzugt wenigstens 50 Gewichts-%, bezogen auf ihr Gesamtgewicht, eines EVOH mit wenigstens 40 und höchstens 85 Mol-% Vinylacetat, das zu wenigstens 90% verseift ist.

Die Schichten (ii) und (ii') enthalten einen extrudierbaren Haftvermittler. Als solcher werden bevorzugt modifizierte Polyolefine wie z.B. Polyethylen, Polypropylen, Ethylen/Propylen-Copolymerisate, Ethylen/α-Olefin-Copolymerisate oder Ethylenl-Vinylacetat-Copolymerisate eingesetzt, die mit mindestens einem Monomer aus der Gruppe der α,β-einfach ungesättigten Dicarbonsäuren, wie beispielsweise Maleinsaure, Fumarsaure, Itaconsaure oder deren Säureanhydriden, Säureestern, Säureamiden und Säureimiden, gepfropft sind. Als extrudierbare Haftvermittler können daneben Copolymerisate von Ethylen mit α,β-einfach ungesättigten Dicarbonsäuren, wie Acrylsäure, Methacrylsäure und/oder deren Metallsalze mit Zink oder Natrium und/oder deren Alkyl(C₁-C₄)ester, die auch mit mindestens einem Monomer aus der Gruppe der α,β-einfach ungesättigten Dicarbonsäuren, wie beispielsweise Maleinsäure, Fumarsäure, Itaconsäure oder deren Säureanhydriden, Säureestern, Säureamiden und Säureimiden, gepfropft sein können, zum Einsatz kommen. Daneben können auch Polyolefine wie z.B. Polyethylen, Polypropylen, Ethylen/Propylen-Copolymerisate oder Ethylen/α-Olefin-Copolymerisate, die mit Copolymerisaten von Ethylen mit α,β-einfach ungesättigten Dicarbonsäuren, wie Acrylsäure, Methacrylsäure und/oder deren Metallsalzen mit Zink oder Natrium und/oder deren AlkyleC₁₋C₄)estern, gepfropft sind, zum Einsatz kommen. Besonders geeignet als Haftvermittler sind Polyolefine, insbesondere Ethylen/α-Olefin-Copolymerisate mit aufgepfropftem α,β-einfach ungesättigten Dicarbonsäureanhydrid, insbesondere Maleinsäureanhydrid.

In einer möglichen Ausführung der erfindungsgemäßen Folie enthält die Schicht (v), die Schicht (iv) oder beide Schichten neben den bereits genannten Polymeren auch einen weiteren, mit den in Schicht (v) Eingang findenden Polymeren, nicht mischbaren thermoplastischen Rohstoff (A) zur Erzielung einer peelfähigen Versiegelung.
Der thermoplastische Rohstoff (A) ist vorzugsweise Polybutylen. Günstige Konzentrationen von (A) liegen zwischen 5 und 25 Gewichts-%, bezogen auf das Gesamtgewicht der Schicht, in der (A) enthalten ist.

Alle oder einzelne Lagen der erfindungsgemäßen Folie können zusätzlich mit Additiven ausgestattet sein, die die Funktionalität der Folie verbessern. Beispiele sind als Antiblockmittel bekannte feste anorganische Partikel, die aus der äußeren Oberfläche der Siegelschicht hervortreten und auf diese Weise das Gleitverhalten der Folie verbessern. Hierfür geeignet sind Siliziumoxid, Calciumcarbonat, Magnesiumsilikat, Aluminiumsilikat, Calciumphosphat, Talkum und dergleichen. Bevorzugt kommt daraus Siliciumdioxid zum Einsatz. Wirksame Mengen liegen im Bereich von 0,05 bis 2 Gewichts-%, vorzugsweise 0,1 bis 0,8 Gewichts-%. Die mittlere Teilchengröße liegt zwischen 1 und 10 µm, bevorzugt 2 und 5 µm, wobei hier Teilchen mit kugelförmiger Gestalt besonders geeignet sind. Vorzugsweise werden diese Partikel nur in der Schicht (v) eingesetzt.

Die erfindungsgemäße Folie kann durch Zugabe von Farbstoffen eingefärbt werden.

In bevorzugter Form wird die erfindungsgemäße Folie auf der Kaschierseite zur Erzielung einer erhöhten Oberflächenspannung vorbehandelt.

Die erfindungsgemäße Folie zeigt eine überraschend schnelle beschlagsverhindernde Wirkung nach dem Verpacken eines feuchten Füllguts. Es war nicht zu erwarten, dass diese Wirkung darüber hinaus auch über einen Zeitraum bis zu einer Woche anhält.

Überraschend ist die hohe mechanische Integrität der Folie, die eine Separation zwischen einzelnen Schichten nicht zuläßt.

Die Folie zeigt ferner eine unerwartet gute Gleitfähigkeit gegen Metall.

Ein weiterer Gegenstand der Erfindung ist ein die erfindungsgemäße Folie enthaltendes Verpackungsmaterial.

Die erfindungsgemäße Folie sowie das sie enthaltende Verpackungsmaterial läßt sich auf üblichen Anlagen zur Produktion von Mehrschichtverbunden herstellen. Das sie enthaltende Verpackungsmaterial kann insbesondere eine Verbundfolie mit einem Substrat aus Papier, Aluminium, Zellglas, Polypropylen, Polyalkylenterephthalat, Polyamid, Polycarbonat, Polyvinylalkohol, EVOH, Polystyrol oder Kombinationen daraus sein, wobei die Thermoplaste gereckt oder ungereckt sein können.

Die Trägerbahn und die erfindungsgemäße mehrlagige Kaschierfolie werden üblicherweise getrennt vorgefertigt und durch Verwendung eines Kaschierklebstoffs zum erfindungsgemäßen Verpackungsmaterial verbunden.

Dabei kann die mehrlagige Kaschierfolie durch Coextrusion als Blasfolie oder als Flachfolie hergestellt worden sein.

### Beispiele

### Vergleichsbeispiel 1

Eine Siegelschicht mit dem Aufbau PE-LD-3//HV//E/VOH//HV//PE-LD-1//PE-LD-2 mit den Schichtdicken 15/3/5/3/7/7 µm wurde durch Coextrusion als Blasfolie hergestellt und mit einem Kaschierkleber gegen handelsübliches biaxial gerecktes Polypropylen der Dicke 20 µm laminiert.

PE-LD-1 hat eine Dichte von 0,923 g/cm³, einen Schmelzpunkt von 108°C und enthält 3,5% Glycerinmonostearat, PE-LD-2 hat eine Dichte von 0,923 g/cm³, einen Schmelzpunkt von 108°C und ist mit 2000 ppm Erucasäureamid und 2000 ppm Siliziumoxid der mittleren Teilchengröße 5 µm ausgerüstet. PE-LD-3 hat eine Dichte von 0,923 g/cm³, einen Schmelzpunkt von 108°C und enthält keine weiteren Zusätze.
HV ist ein mit Maleinsäureanhydrid gepropftes PE-LLD mit einer Dichte von 0,92 g/cm³. E/VOH ist ein Ethylen/Vinylalkohol-Copolymerisat mit einem Ethylengehalt von 38% und einem MFR von 1,7 g/10min.

### Vergleichsbeispiel 2

Eine Siegelschicht mit dem Aufbau PE-LD-3//HV//E/VOH//HV//PE-LD-4//PE-LD-5 mit den Schichtdicken 15/3/5/3/7/7 µm wurde durch Coextrusion als Blasfolie hergestellt und mit einem Kaschierkleber gegen handelsübliches biaxial gerecktes Polypropylen der Dicke 20 µm laminiert.

PE-LD-3, E/VOH und HV entsprechen den gleichbezeichneten Zusammensetzungen aus Vergleichsbeispiel 1, PE-LD-4 hat eine Dichte von 0,923 g/cm³, einen Schmelzpunkt von 108°C und enthält 3,5% Sorbitanmonolaurat, PE-LD-5 hat eine Dichte von 0,923 g/cm³, einen Schmelzpunkt von 108°C und ist mit 1000 ppm Siliziumoxid der mittleren Teilchengröße 8 µm ausgerüstet.

### Beispiel 4

Eine Siegelschicht mit dem Aufbau PE-LD-3//HV//E/VOH//HV//PE-LD-3//PE-LD-7 mit den Schichtdicken 15/3/5/3/7/7 µm wurde durch Coextrusion als Blasfolie hergestellt und mit einem Kaschierkleber gegen handelsübliches biaxial gerecktes Polypropylen der Dicke 20 µm laminiert.

PE-LD-3, E/VOH und HV entsprechen den gleichbezeichneten Zusammensetzungen aus Beispiel 3, PE-LD-7 hat eine Dichte von 0,923 g/cm³, einen Schmelzpunkt von 108°C und enthält 1,5% Sorbitanmonolaurat sowie 1000 ppm Siliziumoxid der mittleren Teilchengröße 8 µm.

An der beispielhaften erfindungsgemäßen Folie sowie an den Vergleichsbeispielen wurden die folgenden Eigenschaften gemessen:
• Die Verbundhaftung nach DIN 53357, Verfahren B.
• Die Antibeschlagswirkung nach dem "Cold Fog Test"-Verfahren der Firma ICI. Das Verfahren wird in der ICI-Druckschrift 90-6E "Antifog evaluation tests for agricultural and food-packaging film" (Herausgeber Nora van der Avort, ICI Europe Ltd., Verlag White & Farrell Ltd, England 1993) beschrieben. Es werden über die Zeit Bewertungen für das Aussehen einer über einen bei 4°C gelagerten wassergefüllten Becher gespannten Folie vergeben. Diese lauten wie folgt:

| Note | Beschreibung | Leistung |
|---|---|---|
| A | Opake Schicht aus kleinen Nebeltröpfchen | Sehr schlecht |
| B | Opake oder transparente Schicht aus großen Tröpfchen | Schlecht |
| C | Komplette Schicht aus großen transparenten Tropfen | Schlecht |
| D | Zufällig verteilte oder große transparente Tropfen | Gut |
| E | Transparenter Film ohne sichtbares Wasser | Exzellent |

• Der Gleitreibkoeffizient der Siegelseite gegen Metall nach DIN 53375.

Die Ergebnisse sind in untenstehender Tabelle zusammengefasst:

| Merkmal | Einheit | Beispiel (B) bzw. Vergleichsbeispiel (V) | | |
|---|---|---|---|---|
| | | V1 | V2 | B4 |
| Gleitreibkoeffizient | 1 | 0,9 | 0,7 | 0,4 |
| Verbundhaftung | N/15 mm | 4,3 | 4,5 | nicht trennbar |
| Cold-Fog-Rating | | | | |
| nach 30 min | Note | C/D | C/B | A |
| nach 2 h | Note | C/D | C/D | B |
| nach 5 h | Note | C/B | C/D | B |
| nach 1 d | Note | C/B | C/D | B |
| nach 2 d | Note | C/B | C/D | C/D |
| nach 4 d | Note | C/B | C/D | C/D |
| nach 7 d | Note | C/D | C/D | E |

## Patentansprüche

1. Mehrschichtige, siegelbare Kaschierfolie von innen nach außen aufgebaut aus
a) einer Innenschicht (i) aus Ethylen/Vinylalkohol-Copolymerisat, die begrenzt wird von
b) einer Haftvermittlerschicht (ii) auf der Siegelseite und einer Haftvermittlerschicht (ii') auf der Kaschierseite der Folie, gefolgt von
c) wenigstens einer weiteren Schicht (iii) auf der Kaschierseite der Folie und wenigstens einer Schicht (iv) auf der Siegelseite der Folie, auf die
d) die Siegelschicht (v) aufgebracht ist,
wobei die mehrschichtige Folie 0,1 bis 3 Gew%, bezogen auf das Gesamtgewicht der Folie, eines Sorbitanmonoesters enthält.

2. Kaschierfolie nach Anspruch 1, **dadurch gekennzeichnet, dass** die mehrschichtige Folie 0,3 bis 1 Gew%, bezogen auf das Gesamtgewicht der Folie, eines Sorbitanmonoesters enthält.

3. Kaschierfolie nach Anspruch 1 oder 2, **dadurch gekennzeichnet, dass** die Schicht (iv) zum Zeitpunkt der Herstellung der Folie keinen oder weniger als 0,02 Gew%, bezogen auf das Gesamtgewicht der Folie, Sorbitanmonoester enthält.

4. Kaschierfolie nach einem der Ansprüche 1 bis 3, **dadurch gekennzeichnet, dass** der Sorbitanmonoester ein Monoester aus Sorbitan und gesättigten oder ungesättigten Fettsäuren mit zwischen 8 und 40 C-Atomen ist.

5. Kaschierfolie nach Anspruch 4, **dadurch gekennzeichnet, dass** der Sorbitanmonoester Sorbitanmonopalmitat und/oder Sorbitanmonolaurat ist.

6. Kaschierfolie nach einem der Ansprüche 1 bis 5, **dadurch gekennzeichnet, dass** die Schicht (ii) bzw. (ii') ein modifiziertes Polyolefin, wie Polyethylen, Polypropylen, Ethylen/Propylen-Copolymerisat, Ethylen/α-Olefin-Copolymerisat oder Ethylen/Vinylacetat-Copolymerisat gepfropft mit mindestens einem Monomer aus der Gruppe der α,β-einfach ungesättigten Carbonsäuren, wie Maleinsäure, Fumarsäure, Itaconsäure, oder deren Säureanhydriden, vorzugsweise Ethylen/α-Olefin-Copolymerisate mit aufgepfropften α,β-einfach ungesättigten Carbonsäureanhydriden enthält.

7. Kaschierfolie nach einem der Ansprüche 1 bis 6, **dadurch gekennzeichnet, dass** die Schichten (iii), (iv) und (v) Polypropylen-Copolymerisate aus Ethylen und Propylen, Copolymerisate aus Ethylen und Vinylacetat, Copolymerisate aus Ethylen und ungesättigten Estern wie Butylacrylat oder Ethylacrylat, Copolymerisate aus Ethylen und ungesättigten Carbonsäuren, Salze der Copolymerisate aus Ethylen und ungesättigten Carbonsäuren, Polyethylen niedriger Dichte, Polyethylen hoher Dichte und/oder Copolymerisate aus Ethylen und α-Olefinen (PE-LLD) enthalten.

8. Verwendung einer Kaschierfolie gemäß einem der Ansprüche 1 bis 7 zur Herstellung von Verpackungsmaterial für Lebensmittel.

9. Verpackungsmaterial, enthaltend eine Kaschierfolie gemäß einem der Ansprüche 1 bis 7.

10. Verpackungsmaterial nach Anspruch 9, aus einer Verbundfolie mit einem Substrat aus Papier, Aluminium, Zellglas, Polypropylen, Polyalkylenterephthalat, Polyamid, Polycarbonat, Polyvinylalkohol, Copolymerisat aus Ethylenvinylalkohol, Polystyrol oder Kombinationen daraus, **wobei die Thermoplasten gereckt oder ungereckt sein können.**

## Claims

1. Multilayer, sealable lamination foil composed, from the inside to the outside,
a) of an inner layer (i) composed of ethylene-vinyl alcohol copolymer, and bounded by
b) an adhesion-promoter layer (ii) on the sealable side and by an adhesion-promoter layer (ii') on the lamination side of the foil, followed by
c) at least one further layer (iii) on the lamination side of the foil and by at least one layer (iv) on the sealable side of the foil, to which
d) the sealable layer (v) has been applied,
where the multilayer foil comprises from 0.1 to 3% by weight, based on the total weight of the foil, of a sorbitan monoester.

2. Lamination foil according to Claim 1, **characterized in that** the multilayer foil comprises from 0.3 to 1% by weight, based on the total weight of the foil, of a sorbitan monoester.

3. Lamination foil according to Claim 1 or 2, **characterized in that** the layer (iv) comprises, at the juncture of production of the foil, no, or less than 0.02% by weight, based on the total weight of the foil, of sorbitan monoester.

4. Lamination foil according to any of Claims 1 to 3, **characterized in that** the sorbitan monoester is a monoester derived from sorbitan and from saturated or unsaturated fatty acids having between 8 and 40 carbon atoms.

5. Lamination foil according to Claim 4, **characterized in that** the sorbitan monoester is sorbitan monopalmitate and/or sorbitan monolaurate.

6. Lamination foil according to any of Claims 1 to 5, **characterized in that** the layer (ii) and, respectively, (ii') comprises a modified polyolefin, such as polyethylene, polypropylene, ethylene-propylene copolymer, ethylene-α-olefin copolymer or ethylene-vinyl acetate copolymer grafted with at least one monomer from the group of the α,β-monounsaturated carboxylic acids, such as maleic acid, fumaric acid, itaconic acid, or anhydrides thereof, preferably ethylene-α-olefin copolymers with grafted-on α,β-monounsaturated carboxylic anhydrides.

7. Lamination foil according to any of Claims 1 to 6, **characterized in that** the layers (iii), (iv) and (v) comprise polypropylene copolymers derived from ethylene and propylene, copolymers derived from ethylene and vinyl acetate, copolymers derived from ethylene and from unsaturated esters, such as butyl acrylate or ethyl acrylate, copolymers derived from ethylene and from unsaturated carboxylic acids, salts of the copolymers derived from ethylene and from unsaturated carboxylic acids, low-density polyethylene, high-density polyethylene and/or copolymers derived from ethylene and from α-olefins (LLDPE).

8. Use of a lamination foil according to any of Claims 1 to 7 for production of foods- or drinks-packaging material.

9. Packaging material comprising a lamination foil according to any of Claims 1 to 7.

10. Packaging material according to Claim 9, composed of a composite foil with a substrate composed of paper, aluminium, cellophane, polypropylene, polyalkylene terephthalate, polyamide, polycarbonate, polyvinyl alcohol, copolymer derived from ethylene-vinyl alcohol, polystyrene or combinations thereof, where the thermoplastics may be stretched or unstretched thermoplastics.

## Revendications

1. Film pour contre-collage, multicouche, soudable, constitué, de l'intérieur vers l'extérieur, de
a) une couche interne (i) à base de copolymère éthylène/alcool vinylique, qui est délimitée par
b) une couche de promoteur d'adhérence (ii) sur la face de soudage et une couche de promoteur d'adhérence (ii') sur la face de contre-collage du film, suivie de
c) au moins une autre couche (iii) sur la face de contre-collage du film et au moins une couche (IV) sur la face de soudage du film, sur laquelle est appliquée
d) la couche de soudage (v),
le film multicouche contenant de 0,1 à 3 % en poids, par rapport au poids total du film, d'un monoester de sorbitanne.

2. Film pour contre-collage selon la revendication 1, **caractérisé en ce que** le film multicouche contient de 0,3 à 1 % en poids, par rapport au poids total du film, d'un monoester de sorbitanne.

3. Film pour contre-collage selon la revendication 1 ou 2, **caractérisé en ce que** la couche (iv), au moment de la fabrication du film, ne contient pas ou contient moins de 0,02 % en poids, par rapport au poids total du film, de monoester de sorbitanne.

4. Film pour contre-collage selon l'une quelconque des revendications 1 à 3, **caractérisé en ce que** le monoester de sorbitanne est un monoester de sorbitanne et d'acides gras saturés ou insaturés ayant entre 8 et 40 atomes de carbone.

5. Film pour contre-collage selon la revendication 4, **caractérisé en ce que** le monoester de sorbitanne est le monopalmitate de sorbitanne et/ou le monolaurate de sorbitanne.

6. Film pour contre-collage selon l'une quelconque des revendications 1 à 5, **caractérisé en ce que** la couche (ii) ou (ii') contient une polyoléfine modifiée, telle que le polyéthylène, le polypropylène, un copolymère éthylène/propylène, un copolymère éthylène/α-oléfine ou un copolymère éthylène/acétate de vinyle greffé avec au moins un monomère choisi dans le groupe des acides carboxyliques α,β-mono-insaturés, tels que l'acide maléique, l'acide fumarique, l'acide itaconique, ou leurs anhydrides d'acides, de préférence des copolymères éthylène/α-oléfine comportant des anhydrides d'acides carboxyliques α,β-mono-insaturés, greffés.

7. Film pour contre-collage selon l'une quelconque des revendications 1 à 6, **caractérisé en ce que** les couches (iii), (iv) et (v) contiennent des copolymères polypropylène d'éthylène et propylène, des copolymères d'éthylène et acétate de vinyle, des copolymères d'éthylène et d'esters insaturés tels que l'acrylate de butyle ou l'acrylate d'éthyle, des copolymères d'éthylène et d'acides carboxyliques insaturés, des sels des copolymères d'éthylène et d'acides carboxyliques insaturés, un polyéthylène basse densité, un polyéthylène haute densité et/ou des copolymères d'éthylène et d'α-oléfines (PE-LLD).

8. Utilisation d'un film pour contre-collage selon l'une quelconque des revendications 1 à 7, pour la fabrication de matériau d'emballage pour des produits alimentaires.

9. Matériau d'emballage comportant un film pour contre-collage selon l'une quelconque des revendications 1 à 7.

10. Matériau d'emballage selon la revendication 9, à base d'un film composite avec un support en papier, aluminium, Cellophane, polypropylène, poly(alkylène-téréphtalate), polyamide, polycarbonate, poly(alcool vinylique), copolymère d'alcool éthylènevinylique, polystyrène ou d'associations de ceux-ci, les matières thermoplastiques pouvant être étirées ou non étirées.
